# FASCICULE DE BREVET EUROPEEN

(11) **EP 3 040 312 B1**
(45) Date de publication et mention de la délivrance du brevet: **09.05.2018**
(21) Numéro de dépôt: 15196543.1
(22) Date de dépôt: 26.11.2015
(51) Int. Cl.: C02F 1/42, C02F 1/52, C02F 9/00

(54) **PROCEDE DE TRAITEMENT D'EAU COMPRENANT UNE ETAPE D'ADSORPTION SUR RESINE ECHANGEUSE D'IONS ET UNE ETAPE DE COAGULATION/FLOCULATION LESTEE ET DE SEPARATION, ET INSTALLATION CORRESPONDANTE**
WASSERAUFBEREITUNGSVERFAHREN, DAS EINE ADSORPTIONSSTUFE AUF IONENAUSTAUSCHERHARZ UND EINE STUFE MIT KOAGULATION/BALLASTAUSFLOCKUNG UND TRENNUNG UMFASST, UND ENTSPRECHENDE ANLAGE
WATER TREATMENT METHOD COMPRISING A STEP OF ADSORPTION ON ION-EXCHANGE RESIN AND A STEP OF COAGULATION/BALLASTED FLOCCULATION AND SEPARATION, AND CORRESPONDING INSTALLATION

(30) Priorité: 05.12.2014 FR 1462014
(43) Date de publication de la demande: 06.07.2016
(73) Titulaire: Veolia Water Solutions & Technologies Support, 94417 Saint-Maurice Cedex (FR)
(72) Inventeur: SAUVIGNET, Philippe, 35460 SAINT-ETIENNE EN COGLES (FR); GAID, Abdelkader, 75014 PARIS (FR)
(74) Mandataire: Vidon Brevets & Stratégie

(56) Documents cités:
- WO-A1-99/59923
- WO-A1-2005/003037
- JP-A- 2014 000 510

## Description

### Domaine de l'invention

L'invention concerne le domaine du traitement des eaux en vue d'en abattre la teneur en matières organiques, la teneur en matière en suspension, la turbidité ainsi que la couleur.

Plus précisément, l'invention concerne le domaine du traitement de telles eaux par voie physico-chimique.

L'invention trouve notamment son application pour :
- le recyclage d'eau à partir d'eaux usées en vue de diverses utilisations,
- le traitement des eaux de procédés industriels (tels que par exemple les eaux spécifiques utilisées pour l'industrie microélectronique...),
- le traitement des nappes d'eau dans lesquelles des matières organiques se sont infiltrées,
- la potabilisation de l'eau.

L'invention trouve tout particulièrement son application dans le cadre des procédés de dessalement d'eau de mer ou d'eau saumâtres, ou du traitement des eaux de surface à forte variation de concentration en algues. En effet, la présente invention est particulièrement efficace pour éliminer les algues contenues dans des eaux à traiter.

### Art antérieur

Différents procédés physicochimiques pour abattre les teneurs en matières organiques dans les eaux sont connus de l'homme de l'art.

Beaucoup de ces procédés impliquent la mise en oeuvre de réactifs chimiques, coagulants et/ou floculants, qui permettent d'agréger ces matières pour faciliter leur séparation ultérieure de l'eau. Ces procédés nécessitent de travailler à de forts dosages en réactifs chimiques, et en milieu acide (pH 5-6). Il est ainsi possible d'éliminer 50% à 65% des matières organiques.

L'inconvénient principal de tels procédés réside en la consommation élevée en réactifs chimiques qu'ils impliquent. A titre d'exemple, pour éliminer 50 % à 65 % des matières organiques d'une eau en contenant entre 10 mg/l et 14 mg/l (exprimés en carbone organique dissous), il faut entre 170 g/m³ et 220 g/m³ de réactif coagulant (FeCl₃), auxquels il faut ajouter 30 à 100 g/m³ d'acide afin de maintenir le pH entre 5 et 6 , si l'eau est tamponnée.

Ces réactifs ont des coûts relativement élevés qui impactent de façon non négligeable les coûts des procédés les mettant en oeuvre.

La consommation élevée de ces réactifs induit de plus des productions de quantités importantes de boues. Or, ces boues nécessitent un traitement, visant au minimum à les hygiéniser et à les stabiliser, mais aussi généralement à réduire leur volume. Plus les quantités de boues produites sont importantes, plus la taille des installations pour les traiter doit donc être importante, ce qui implique une augmentation du coût de celles-ci.

Par ailleurs, la valorisation agricole des boues implique d'y ajouter des quantités de chaux qui augmentent d'autant le volume des boues et donc leur cout de traitement.

En deuxième lieu, les conditions acides de mise en oeuvre de ces réactifs conduisent à l'obtention d'une eau produite agressive et corrosive qu'il convient de neutraliser par addition de réactifs chimiques supplémentaires. Ceci accroit encore les quantités de boues produites et les coûts de traitement. Avant leur neutralisation, ces eaux acides sont de plus suffisamment corrosives pour accélérer le vieillissement des installations dans lesquelles elles transitent.

D'autres procédés physicochimiques pour abattre les teneurs en matières organiques dans les eaux mettent en oeuvre des matériaux adsorbants, comme par exemple le charbon actif en poudre, sur lesquels les matières organiques se fixent.

Les performances de tels procédés sont élevées mais, là encore, leur inconvénient réside dans la forte consommation en matériau adsorbant qu'ils impliquent. Par exemple pour éliminer 50 % et 65 % des matières organiques d'une eau en contenant entre 10 mg/l et 14 mg/l (exprimés en carbone organique dissous), il faut entre 100 et 150 g/m³ de charbon actif en poudre.

Cette forte consommation induit une production de boues supplémentaires et des coûts de mise en oeuvre des procédés correspondant très élevés.

Un des moyens de réduire les consommations en charbon actif connu de l'homme de l'art est d'utiliser deux décanteurs en série : le premier destiné à l'élimination des matières en suspension et de la turbidité et le second utilisé pour l'élimination des matières organiques par addition de charbon actif en poudre qui a la particularité d'être recirculé en permanence jusqu'à saturation. Du charbon actif neuf est alors injecté dans le second décanteur, en remplacement du charbon usité qui en est extrait.

Les performances d'un tel procédé sont très élevées. Son inconvénient est qu'il nécessite la mise en oeuvre de deux décanteurs en série, ce qui induit des couts d'investissement élevés. On connaît par JP2014000510 un procédé et une installation de traitement d'eau contenant de la matière organique soluble qui comprend une étape d'adsorption de la matière organique consistant à mettre en contact cette eau avec une résine anionique échangeuse d'ions dans une cuve, le soutirage de la résine saturée de ladite cuve et la régénération de ladite résine saturée ainsi soutirée et le recyclage dans ladite cuve de ladite résine ainsi régénérée, et enfin une étape de coagulation/floculation/sédimentation à l'eau filtrée provenant de ladite cuve. On connaît aussi par FR2973794 un procédé de traitement d'eau par coagulation/floculation éventuellement lestée dans lequel une partie d'une eau clarifiée suite à la coagulation floculation est mise en contact avec un réactif adsorbant en poudre en amont de la coagulation/floculation. Un tel procédé permet d'économiser les réactifs mais nécessite une grande quantité de charbon actif.

Enfin, on notera aussi que l'on connaît dans l'art antérieur, notamment par EP1562867 un procédé combinant ajout de charbon actif en poudre et filtration sur membranes. Un tel procédé présente l'inconvénient d'un coût élevé et de difficultés de maintenance des membranes.

### Objectifs de l'invention

L'invention a pour objectif de proposer un procédé physico-chimique de traitement d'eau contenant des matières organiques permettant de pallier au moins certains des inconvénients de l'art antérieur cité ci-dessus.

Notamment, un objectif de la présente invention est de décrire un tel procédé impliquant une consommation en réactifs chimiques beaucoup plus faible que celles nécessaires aux procédés de l'art antérieur cité ci-dessus.

Encore un objectif de la présente invention est de divulguer un tel procédé qui, dans au moins certains modes de réalisation, implique la production de quantités de boues bien plus faibles que celles produites dans les procédés de l'art antérieur cités ci-dessus, et corolairement impliquant des procédés de traitement de ces boues pouvant être mis en oeuvre dans des installations beaucoup plus petites.

Encore un objectif de la présente invention est de proposer un tel procédé qui, dans au moins certains modes de réalisation, implique à capacité de traitement égale, une consommation énergétique moindre que les procédés de l'art antérieur.

Encore un objectif de la présente invention est de décrire un tel procédé permettant l'obtention d'une eau traitée dont l'indice de corrosion est bien plus faible que celui des eaux traitées en milieu acide selon l'art antérieur, et qui par la même engendre une moindre dégradation des installations dans lesquelles elles transitent.

Egalement un objectif de la présente invention est de proposer un tel procédé qui puisse être mis en oeuvre sur une eau de surface pouvant être fortement chargée en matières en suspension.

Egalement un objectif de la présente invention est de divulguer une installation pour la mise en oeuvre d'un tel procédé, présentant à capacité de traitement égale, une surface d'implantation au sol plus faible que les installations mettant en oeuvre les procédés de l'art antérieur cités ci-dessus et impliquant des coûts de réalisation plus faibles.

### Exposé de l'invention

Ces objectifs, ainsi que d'autres qui apparaitront par la suite, sont atteints grâce à l'invention qui concerne un procédé de traitement d'eau contenant de la matière organique caractérisé en ce qu'il comprend :
une étape d'adsorption de la matière organique contenue dans ladite eau consistant à mettre en contact cette eau avec une résine échangeuse d'ions amagnétique dans au moins une cuve infiniment mélangée ;
la filtration du mélange d'eau et de résine au sein de ladite cuve et l'évacuation d'eau filtrée de celle-ci, ladite filtration étant mise en oeuvre grâce à au moins un tamis prévu à l'intérieur de ladite cuve permettant de contenir ladite résine dans ladite cuve infiniment mélangée;
le nettoyage périodique dudit au moins un tamis consistant à séparer de celui-ci la résine saturée qui y s'est accumulée ;
le soutirage de résine saturée de ladite cuve ;
la régénération d'au moins une partie de ladite résine saturée ainsi soutirée ;
le recyclage dans ladite cuve de ladite résine ainsi régénérée ;
une étape de coagulation et de floculation lestée et de séparation comprenant :
   l'apport de réactif coagulant , de réactif floculant et de micro lest (tel que du microsable) à l'eau filtrée provenant de ladite cuve conduisant à la formation de flocs ;
   la séparation desdits flocs formés d'une eau clarifiée ;
   l'évacuation de ladite eau clarifiée ; et,
   l'évacuation des boues formées par les flocs séparés.

Outre l'abattement des matières organiques, le procédé permet également d'abattre, la teneur en matières en suspension, la turbidité, la couleur, et la teneur en algues des eaux traitées lorsqu'elles en contiennent.

Selon un tel procédé, l'étape d'adsorption consiste à traiter l'eau avec une résine échangeuse d'ions amagnétique. Au cours de cette étape, les résines adsorbent les substances organiques et rejettent des ions chlorures en quantités proportionnelles à la quantité de matières organiques adsorbées (on observe ainsi classiquement un ratio de 4 à 5 ppm de chlorures par ppm de COT éliminé). Peu à peu cette résine se sature.

L'utilisation d'une cuve infiniment mélangée dans le cadre de la mise en oeuvre du procédé selon l'invention permet d'avoir une concentration de l'eau en résine essentiellement constante en tout point de la cuve. Ainsi, selon l'invention il n'existe pas de zone dans la cuve où l'eau n'est pas en contact avec la résine, à l'exception bien évidemment des zones de celle-ci en aval du tamis.

Selon l'invention, une partie de la résine saturée est périodiquement ou continûment (de préférence continûment) soutirée, régénérée et recyclée. Dans ce cadre, les fuites de résine sont empêchées, c'est-à-dire que cette résine est cantonnée dans la cuve infiniment mélangée. L'étape de filtration, au sein même de celle-ci, du mélange de résine et d'eau qu'elle accueille, permet de mettre en oeuvre un tel cantonnement tout en laissant sortir de la cuve l'eau très essentiellement épurée des matières organiques. Plus précisément, l'utilisation d'un tamis dont les mailles présentent un seuil de coupure inférieure à la granulométrie moyenne de la résine utilisée, permet de bloquer la résine au sein de la cuve infiniment mélangée. Cette opération permet aussi de maintenir une concentration essentiellement constante de la résine dans la cuve.

L'étape de coagulation/floculation lestée et de séparation consiste à faire passer l'eau très essentiellement dépourvue de matières organiques obtenue en sortie de la cuve infiniment mélangée dans un séparateur auquel sont amenés des réactifs coagulant et floculant en quantités minimes.

Cette étape permet d'affiner l'abattement en matières organiques, et le cas échéant d'abattre la turbidité, la teneur en matières en suspension et la couleur et d'éliminer les algues éventuellement présentes dans cette eau.

En pratique, en utilisant par exemple en tant que réactif coagulant du chlorure ferrique (FeCl₃) disponible dans le commerce, le procédé selon l'invention permet de mettre en oeuvre celui-ci à raison de 10 g/m³ et 50 g/m³ de produit selon la turbidité initiale de l'eau brute à traiter pour obtenir une eau traitée conforme aux normes de qualité d'eau de consommation pour le paramètre COD/COT à partir d'une eau brute contenant entre 10 mg/l et 14 mg/l de matières organiques. Ainsi, la consommation de ce réactif est très faible par rapport à l'art antérieur, qui requiert entre 170 g/m³ et 220 g/m³ de réactif coagulant (FeCl₃) pour la même eau brute. En ce qui concerne le réactif floculant (polymère), sa consommation peut aussi être diminuée. Corolairement, les quantités de boues formées sont moins importantes en quantités, puisque les quantités de réactifs chimiques sont minimisées, ce qui induit de fortes économies sur le coût opératoire du procédé.

De plus, le fait que la floculation soit lestée, permet d'éviter à d'éventuelles fines de résine de passer dans l'eau clarifiée, ces fines étant piégées dans les flocs lestés.

Le procédé selon l'invention présente l'avantage d'autoriser l'ajustement de la performance d'abattement des matières organiques lors de l'étape d'adsorption en jouant sur le taux de régénération de la résine tout en évitant d'avoir à augmenter les doses de réactifs chimiques distribuées lors de l'étape de coagulation/floculation et de séparation.

Selon une variante du procédé selon l'invention, la séparation desdits flocs est effectuée par flottation. Dans un tel cas, un gaz est injecté dans l'eau provenant de la cuve infiniment mélangée, après qu'il y ait été injectés un réactif chimique coagulant et un réactif chimique floculant. Cette injection de gaz permet de provoquer la flottation des matières restant à éliminer dans cette eau (matières organiques résiduelles, matières en suspension, algues, turbidité) et d'en abattre la couleur. L'eau clarifiée est évacuée en partie inférieure du flottateur tandis que les matières séparées (« boues ») sont évacuées en partie supérieure de celui-ci.

Selon une autre variante du procédé selon l'invention, la séparation desdits flocs est effectuée par décantation, lamellaire ou non. Dans un tel cas l'eau clarifiée est évacuée en partie supérieure du décanteur tandis que l'eau traitée est évacuée en partie supérieure de celui-ci.

Selon un aspect préférentiel particulièrement intéressant du procédé selon l'invention, le nettoyage périodique dudit au moins un tamis consistant à séparer de celui-ci la résine saturée qui y s'est accumulée comprend l'injection d'un fluide, choisi dans le groupe constitué par l'eau sous pression et l'air comprimé, à contre courant sur ledit au moins un tamis. L'envoi d'un tel fluide à contre courant sur le tamis permet de décoller la résine saturée qui s'y est accumulée et ainsi de décolmater celui-ci. Cette résine accumulée ainsi décollée de la surface amont du tamis peut être extraite de la cuve pour être régénérée et ensuite recyclée dans celle-ci. Un tel filtre permet de concentrer la résine saturée dans au moins une zone circonscrite audit au moins un tamis et ainsi d'en faciliter l'extraction de la cuve, et en conséquence la régénération puis le recyclage.

Selon une variante très intéressante de l'invention, la régénération de la résine saturée comprend l'élution des matières organiques adsorbées sur celle-ci par passage d'un éluant sur ladite résine et la récupération d'un éluat, ledit éluat étant fractionné en au moins une fraction fortement chargée en matières organiques et au moins une fraction non fortement chargée en matières organiques, ladite fraction fortement chargée en matières organiques étant évacuée et ladite fraction non fortement chargée en matière organique étant recyclée comme éluant.

Un tel procédé de régénération de résine échangeuse d'ions permet d'économiser l'éluant par rapport au procédé de régénération classiquement utilisé dans l'art antérieur qui consiste à épuiser l'éluant et à le renouveler périodiquement en totalité.

Préférentiellement, l'éluat est fractionné en plusieurs fractions et la teneur de chacune des ces fractions en matières organiques est mesurée ou évaluée, par exemple par mesure de l'absorbance UV de la fraction d'éluat. Ceci permet de répartir les fractions en fractions fortement chargées en matières organiques, c'est-à-dire celles présentant un paramètre représentatif de la concentration en matières organiques dépassant un certain seuil, et en fractions non fortement chargées en matières organiques, c'est-à-dire celles présentant un paramètre représentatif de la concentration en matières organiques en deçà dudit seuil. Seules les fractions non fortement chargées en matières organiques sont recyclées en tant qu'éluant. Ce mode de régénération de la résine peut notamment s'appuyer en particulier sur l'utilisation d'une mesure d'absorbance UV en ligne sur l'éluat permettant de choisir de manière très précise les fractions d'éluat à éliminer par rapport à un simple niveau de seuil.

En pratique, le profil d'élution montre un éluat qui se charge progressivement en matières éluées puis dont la concentration en ces matières diminue progressivement. Les fractions recyclées comme éluant sont les premières et les dernières émises.

On notera qu'un tel procédé de régénération de résine pourra être appliqué dans tout type de procédé, notamment de traitement d'eau autres que celui selon la présente invention.

On pourra envisager d'utiliser différents types de résines pour mettre en oeuvre l'étape d'adsorption du procédé selon l'invention. Préférentiellement on utilisera une résine amagnétique anionique.

Les résines magnétisées sont utilisées dans l'art antérieur (Procédé Myex ®) pour favoriser leur séparation de l'eau traitée. Le défaut principal de telles résines réside en leur caractère très friable, qui entraine une production de fines importantes et un coût supplémentaire pour maintenir la quantité de résine constante dans le système par appoint de résine neuve. Un tel procédé nécessite une décantation supplémentaire avant l'étape de clarification afin de retirer les fines de l'eau traitée. Les pertes en résine sont importantes.

Dans le cadre de la présente invention, la résine est confinée dans la cuve et n'a donc pas à être séparée, par exemple par un décanteur intermédiaire, complexe et coûteux.

L'invention concerne également une installation de traitement d'eau pour la mise en oeuvre du procédé décrit ci-dessus caractérisée en ce qu'elle comprend :
une cuve infiniment mélangée accueillant une résine échangeuse d'ions amagnétique pourvue de moyens d'amenée d'eau brute, de moyens d'agitation, d'au moins un tamis, de moyens d'extraction de ladite résine et de moyens d'évacuation d'eau filtrée ;
des moyens de nettoyage dudit au moins un tamis ;
des moyens de régénération de ladite résine et des moyens de recyclage de résine régénérée dans ladite cuve infiniment mélangée ;
au moins un réacteur de coagulation et de floculation lestée en communication de fluide avec ladite cuve infiniment mélangée ;
des moyens de séparation en communication de fluide avec ledit au moins un réacteur de coagulation et de floculation pourvus de moyens d'évacuation d'eau clarifiée et de moyens d'évacuation de boues.

Selon une variante, lesdits moyens de séparation incluent un flottateur.

Selon une variante lesdits moyens de séparation incluent un décanteur équipée ou non de lamelles.

Préférentiellement, ledit tamis présente un seuil de coupure compris entre 40 µm et 120 µm. Ce seuil de coupure permet de contenir dans la cuve infiniment mélangée les résines pouvant être utilisées préférentiellement dans le cadre du procédé selon l'invention.

Préférentiellement, ledit tamis est réalisé en matière plastique de qualité alimentaire, de façon préférée entre toute en polyéthylène haute densité (PEHD) poreux.

Egalement avantageusement, ladite résine est une résine amagnétique.

Préférentiellement, lesdits moyens de régénération de résine comprennent une cuve de régénération , des moyens d'amenée d'éluant et des moyens de séparation de l'éluat en fractions.

Egalement préférentiellement, les moyens de nettoyage dudit au moins un tamis incluent des moyens de distribution d'un fluide choisi parmi l'eau sous pression et l'air comprimé sur ledit au moins un tamis.

Avantageusement, lesdits moyens d'extraction de résine incluent au moins un récupérateur de résine prévu dans la cuve infiniment mélangée à proximité dudit au moins un tamis.

On notera que de telles caractéristiques pour la régénération de résine pourront être appliquées dans tout type d'installation, notamment de traitement d'eau, dans lesquelles un une régénération de résine sera envisageable.

### Liste des figures

L'invention, ainsi que les différents avantages qu'elle présente, seront plus facilement compris grâce à la description qui va suivre d'un mode de réalisation de l'installation et du procédé selon l'invention, donné à titre d'exemples non limitatif, en référence aux figures, dans lesquelles :
- la figure 1 représente, de façon schématique un exemple de mode de réalisation d'une installation selon l'invention pour la mise en oeuvre du procédé selon l'invention ;
- la figure 2 représente, de façon schématique, une cuve infiniment mélangée, pourvue de moyens de régénération de résine et de moyens de recyclage de résine régénérée dans ladite cuve pouvant être mise en oeuvre dans le cadre de l'invention ; et,
- la figure 3 représente une vue schématique en perspective d'un mode de réalisation d'un tamis pouvant être mise en oeuvre dans une installation selon la présente invention.

### Description de modes de réalisation de l'invention

### Installation

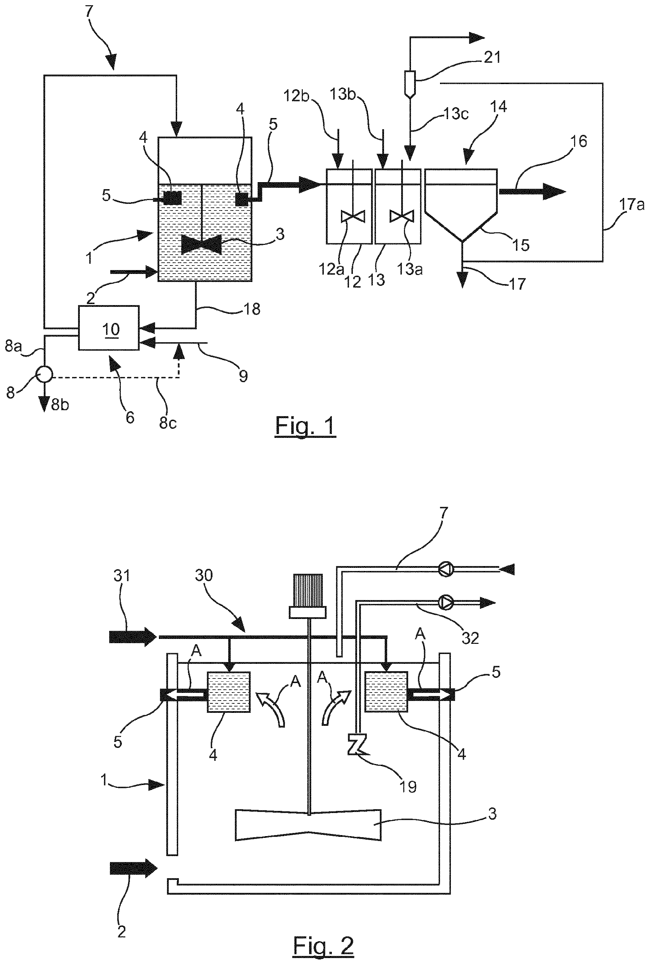

En référence à la figure 1 et à la figure 2 l'installation selon l'invention représentée schématiquement comprend une cuve 1 infiniment mélangée. Cette cuve 1 est pourvue de moyens d'amenée d'eau brute 2 prévus dans sa partie inférieure et de moyens d'évacuation 5 d'eau filtrée prévus dans sa partie supérieure. Elle est également équipée de moyens d'agitation 3 comprenant un agitateur à pales mus par un moteur. Dans d'autres modes de réalisation ces moyens d'agitation pourront être constitués par d'autres types de moyens d'agitation, notamment par un dispositif tel que décrit dans la demande de brevet FR2971436.

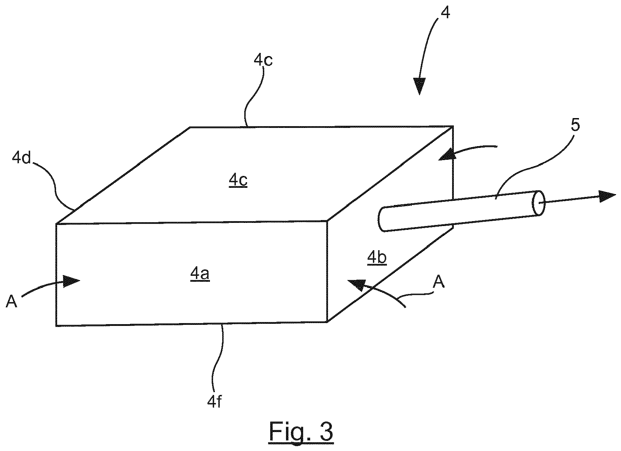

Conformément à la présente invention, la cuve 1 est pourvue de un ou de plusieurs tamis 4, dont la description détaillée sera faite ci-après en référence à la figure 3. Ces tamis sont, dans le présent exemple de mode de réalisation, prévus dans la partie supérieure de la cuve 1. Toutefois, ils pourraient, dans d'autres modes de réalisation, être prévus dans tout autre partie de la cuve, le point important étant qu'ils puissent être submergés par le mélange d'eau et de résine accueilli par la cuve infiniment mélangée 1. Ce mélange est représenté en grisé sur la figure 1.

Enfin, la cuve infiniment mélangée 1 est également pourvue de moyens d'extraction de résine 18.

Comme on peut le voir sur la figure 2 et conformément à la présente invention, l'installation comprend aussi des moyens de nettoyage 30 des tamis 4. Ces moyens de nettoyage 30 incluent une amenée d'air comprimée 31, à contre courant du sens de filtration du mélange de résine et d'eau par les tamis. Ce sens de filtration est symbolisé par les flèches A sur la figure 2.

Egalement conformément à la présente invention, les moyens d'extraction de résine 18 incluent un récupérateur 19 conçu pour récupérer l'essentiel des matières décollées des tamis 4 grâce aux moyens de nettoyage 30 de ceux-ci. Ce récupérateur 19 est relié à une canalisation 32 pourvue d'une pompe qui extrait ces matières pour les acheminer vers les moyens de régénération de résine 6.

L'installation comprend en effet également de tels moyens de régénération de résine 6 en communication de fluide avec la cuve 1 infiniment mélangée. Ces moyens de régénération 6 de résine incluent une cuve de régénération 10, des moyens d'amenée d'éluant 9 à ladite cuve de régénération et des moyens de séparation 8 de l'éluat en fractions. Une canalisation commune 8a permet d'amener la totalité de l'éluat provenant de la cuve de régénération 10 vers les moyens de séparation 8, une canalisation 8c est dédiée au recyclage de fractions d'éluat peu chargées en matières organiques, à titre d'éluant vers les moyens d'amenée d'éluant 9, tandis qu'une canalisation 8b est dédiée à l'évacuation de fractions d'éluat plus chargées en matières organiques et non réutilisables à titre d'éluant.

L'installation comprend également des moyens de recyclage 7 de la résine régénérée grâce aux moyens de régénération de résine 6. Ces moyens de recyclage incluent une canalisation reliant la partie inférieure de la cuve de régénération 10 à la cuve infiniment mélangée 1 et permettent le réacheminement de résine régénérée dans la cuve 10.

L'installation inclut également un réacteur de coagulation 12 en communication de fluide avec les moyens 5 d'évacuation de l'eau filtrée dans la cuve infiniment mélangée. Ce réacteur 12 est pourvu d'un agitateur à pales 12a et de moyens de distribution de réactif coagulant 12b.

L'installation inclut également un réacteur de floculation 13 en communication de fluide avec ledit réacteur de coagulation 12. Ce réacteur 13 est pourvu d'un agitateur à pales 13a, de moyens de distribution de réactif coagulant 13b et de moyens de distribution d'un lest destiné à augmenter la densité des flocs et donc à faciliter leur ultérieure séparation par décantation.

Enfin, l'installation comprend des moyens de séparation 14 comprenant des moyens d'évacuation d'eau clarifiée 16 et des moyens d'évacuation de boues 17. Dans le présent mode de réalisation, ces moyens de séparation incluent un décanteur 15 pourvu de lamelles inclinées (non représentées) aidant au processus de décantation. Les moyens d'évacuation de boues 17 incluent une canalisation 17a de transfert d'une partie de ces boues vers un hydrocyclone 21 dont la sousverse communique avec les moyens de distribution de lest 20 et dont la surverse permet d'évacuer une eau sale. Ces moyens permettent de recycler le lest et ainsi d'en diminuer la consommation.

En référence à la figure 3, les tamis 4 sont constitués en forme de boîte dont les parois latérales 4a, 4b, 4c, 4d, 4e et le fond 4f sont constitués en plaques épaisses de 3 à 10 mm en PEHD poreux dont les pores présentent un seuil de coupure compris entre 40 µm et 120 µ. Le mélange de résine et d'eau présent dans la cuve infiniment mélangé est filtré, comme symbolisé par les flèches A, dans le sens allant de l'extérieur de la « boîte » vers l'intérieur de celle-ci. Les moyens d'évacuation 5 d'eau filtrée communiquent avec cet intérieur.

### Procédé

L'installation ici décrite a été mise en oeuvre pour traiter une eau présentant une teneur en matière organique exprimée en COT (carbone organique total) d'environ 2,5 à 5 mg C/L et une turbidité variant de 1 à 50 NTU.

A titre de réactif coagulant, du chlorure ferrique FeCl₃ a été utilisé.

A titre de réactif floculant, un polymère anionique de type AN 934 a été utilisé.

A titre de lest, du micro-sable a été utilisé.

La résine utilisée a été une résine anionique amagnétique commercialisée sous la dénomination Purolite.

L'eau a été traitée dans l'installation selon un débit de 3 m³/h, le volume d'eau traité ayant correspondu à 24 m³/j.

La concentration de la résine dans l'eau au sein de la cuve infiniment mélangée a été fixée et maintenue dans la gamme de 100 à 200 ml de résine/L typiquement 150 ml de résine/L.

Une vitesse de clarification dans le décanteur de 60 m/h a été mise en oeuvre.

Pour la régénération de la résine, de la saumure de 120 à 300 g NaCl/l été utilisée à titre d'éluant. L'éluat a été fractionné en plusieurs fractions, celles présentant une concentration en matières organiques supérieure à un seuil prédéterminé ont été évacuées tandis que les fractions présentant une concentration inférieure à ce seuil ont été réutilisées à titre d'éluant. Cette méthode a permis d'économiser la saumure.

Le recyclage de résine régénérée a été mis en oeuvre de façon à observer un taux de renouvellement de résine au sein de la cuve infiniment mélangée de 2 à 4 ml de résine /L.

L'eau obtenue en sortie d'installation a présenté une teneur en matières organiques exprimée en COT inférieur à 1 mg C/L et une turbidité NTU inférieure à 1.

Pour obtenir cet excellent résultat, seulement 10 g/m³ de FeCl₃ et seulement 0,2 g/ m³ de polymère floculant. La quasi totalité du lest (microsable) a par ailleurs été recyclée.

Le tableau 1 synthétise les coûts suscités par la mise en oeuvre du procédé selon l'invention et deux techniques de l'art antérieur pour traiter un mètre cube de la même eau en vue de l'obtention d'une eau traitée de qualité similaire.

Ces résultats confirment l'avantage de la présente invention sur l'art antérieur en terme d'économie de réactifs chimiques, l'invention autorisant une économie de près de 50 % à 75 % sur le coût global des réactifs utilisés.

Enfin, on notera que le procédé selon l'invention, présente l'avantage de s'affranchir de l'utilisation de résines magnétisées et donc de la production de fines de résine.

| | Prix Réactifs | FR2973794 | | EP162867 | | INVENTION | | |
|---|---|---|---|---|---|---|---|---|
| | Prix) | Dose (g/m3) | Prix (€/m3) | Dose (g/m3) | Prix (€/m3) | Dose (g/m3) | Prix (€/m3) avec Régénération résine 2mL/L | Prix (€/m3) avec Régénération résine 4mL/ |
| Résine appoint (€/L) | 4 | | | | | 0,1 | 0,01 | 0,01 |
| Saumure (NaCl) | 100 €/tonne | | | | | | 0,015 | 0,03 |
| Cout électricité nécessaire à l'étape de régénération de la résine (€) | | | | | | | 0,0002 | 0,0004 |
| FeCl₃ | 150 €/tonne | 10 | 0,0015 | | | 10 | 0,0015 | 0,0015 |
| Charbon actif en poudre | 2500 €/tonne | 20 | 0,0500 | 30 | 0,075 | | | |
| Polymère | 2000 €/tonne | 0,5 | 0,001 | | | 0,2 | 0,0004 | 0,0004 |
| Sable | 150 €/tonne | 5 | 0,00075 | | | 5 | 0,00075 | 0,00075 |
| Acide citrique | 1000 €/tonne | | | | 0,0006 | | | |
| Eau de Javel | | | | | 0,001 | | | |
| Total en € / m3 d'eau traitée | | | 0,053 | | 0,077 | | 0,028 | 0,043 |

## Revendications

1. Procédé de traitement d'eau contenant de la matière organique **caractérisé en ce qu'**il comprend :
une étape d'adsorption de la matière organique contenue dans ladite eau consistant à mettre en contact cette eau avec une résine échangeuse d'ions amagnétique dans au moins une cuve infiniment mélangée ;
la filtration du mélange d'eau et de résine au sein de ladite cuve et l'évacuation d'eau filtrée de celle-ci, ladite filtration étant mise en oeuvre grâce à au moins un tamis prévu à l'intérieur de ladite cuve permettant de contenir ladite résine dans ladite cuve infiniment mélangée ;
le nettoyage périodique dudit au moins un tamis consistant à séparer de celui-ci la résine saturée qui y s'est accumulée ;
le soutirage de résine saturée de ladite cuve ;
la régénération d'au moins une partie de ladite résine saturée ainsi soutirée ;
le recyclage dans ladite cuve de ladite résine ainsi régénérée ;
une étape de coagulation/floculation lestée et de séparation comprenant
l'apport de réactif coagulant, de réactif floculant et de micro lest à l'eau filtrée provenant de ladite cuve conduisant à la formation de flocs ;
la séparation desdits flocs formés d'une eau clarifiée ;
l'évacuation de ladite eau clarifiée ; et,
l'évacuation des boues formées par les flocs séparés.

2. Procédé selon la revendication 1 **caractérisé en ce que** la séparation desdits flocs est effectuée par flottation.

3. Procédé selon la revendication 1 **caractérisé en ce que** la séparation desdits flocs est effectuée par décantation, lamellaire ou non.

4. Procédé selon l'une quelconque des revendications 1 à 3 **caractérisé en ce que** ledit nettoyage périodique dudit tamis comprend l'injection d'un fluide, choisi dans le groupe constitué par l'eau sous pression et l'air comprimé, à contre courant sur ledit au moins un tamis.

5. Procédé selon l'une des revendications 1 à 4 **caractérisé en ce que** la régénération de la résine saturée comprend l'élution des matières organiques adsorbées sur celle-ci par passage d'un éluant sur ladite résine et la récupération d'un éluat, ledit éluat étant fractionné en au moins une fraction fortement chargée en matières organiques et au moins une fraction non fortement chargée en matières organiques, ladite fraction fortement chargée en matières organiques étant évacuée et ladite fraction non fortement chargée en matière organique étant recyclée comme éluant.

6. Procédé selon l'une des revendications 1 à 5 **caractérisé en ce que** ladite résine est une résine anionique.

7. Installation de traitement d'eau pour la mise en oeuvre du procédé selon l'une quelconque des revendications 1 à 6 **caractérisée en ce qu'**elle comprend :
une cuve infiniment mélangée (1) accueillant une résine échangeuse d'ions amagnétique, ladite cuve étant pourvue de moyens d'amenée d'eau brute (2), de moyens d'agitation (3), d'au moins un tamis (4), de moyens d'extraction de ladite résine (18) et de moyens d'évacuation d'eau filtrée (5) ;
des moyens de nettoyage (17) dudit au moins un tamis (4) ;
des moyens de régénération (6) de ladite résine et des moyens de recyclage (7) de résine régénérée dans ladite cuve infiniment mélangée (1) ;
au moins un réacteur de coagulation et de floculation lestée (12,13) en communication de fluide avec ladite cuve infiniment mélangée (1) ;
des moyens de séparation (14) en communication de fluide avec ledit au moins un réacteur de coagulation et de floculation (12,13) pourvus de moyens d'évacuation d'eau clarifiée (16) et de moyens d'évacuation de boues (17).

8. Installation selon la revendication 7 **caractérisé en ce que** lesdits moyens de séparation incluent un flottateur.

9. Installation selon la revendication 7 **caractérisée en ce que** lesdits moyens de séparation (14) incluent un décanteur (15) équipée ou non de lamelles.

10. Installation selon l'une quelconque des revendications 7 à 9 **caractérisée en ce que** ledit au moins un tamis (4) présente un seuil de coupure compris entre 40 µm et 120 µm.

11. Installation selon l'une quelconque des revendications 7 à 10 **caractérisée en ce que** ledit au moins un tamis est réalisé en matière plastique de qualité alimentaire.

12. Installation selon la revendication 11 **caractérisée en ce que** ladite matière plastique est le polyéthylène haute densité (PEHD) poreux.

13. Installation selon l'une quelconque des revendications 7 à 12 **caractérisée en ce que** ladite résine est un résine amagnétique anionique.

14. Installation selon l'une quelconque des revendications 7 à 13 **caractérisée en ce que** lesdits moyens de régénération (6) de résine comprennent une cuve de régénération (10), des moyens d'amenée d'éluant (9) et des moyens de séparation (8) de l'éluat en fractions.

15. Installation selon l'une quelconque des revendications 7 à 14 **caractérisée en ce que** les moyens de nettoyage (30) dudit au moins un tamis (4) incluent des moyens de distribution d'un fluide choisi parmi l'eau sous pression et l'air comprimé sur ledit au moins un tamis (4).

16. Installation selon l'une quelconque des revendications 7 à 15 **caractérisée** en ce lesdits moyens d'extraction de résine (18) incluent au moins un récupérateur (19) de résine prévu dans la cuve infiniment mélangée (1) à proximité dudit au moins un tamis (4).

## Patentansprüche

1. Verfahren zur Aufbereitung von Wasser, das organisches Material enthält,
**dadurch gekennzeichnet, dass** dieses umfasst:
einen Schritt des Adsorbierens des im Wasser enthaltenen organischen Materials, der daraus besteht, dass dieses Wasser mit einem nichtmagnetischen Ionenaustauscherharz in mindestens einem durchgemischten Behälter in Kontakt gebracht wird;
die Filtration der Mischung von Wasser und Harz innerhalb des Behälters und die Abfuhr des gefilterten Wassers aus diesem, wobei die Filtration mit mindestens einem Sieb durchgeführt wird, das im Inneren des Behälters bereitgestellt ist, wodurch gestattet wird, dass das Harz im durchgemischten Behälter gehalten wird;
die periodische Reinigung des mindestens einen Siebs, die daraus besteht, dass von diesem das gesättigte Harz getrennt wird, das sich dort angesammelt hat;
die Entnahme des gesättigten Harzes aus dem Behälter;
die Regeneration mindestens eines Teils des so entnommenen gesättigten Harzes;
die Rückführung des so regenerierten Harzes in den Behälter;
einen Schritt der Koagulation/Ballastausflockung und der Trennung, umfassend:
das Einbringen eines Koagulationsreagens, eines Ausflockungsreagens und von Mikroballast in das gefilterte Wasser, das aus dem Behälter stammt, was zur Bildung von Flocken führt;
die Trennung der gebildeten Flocken von einem geklärten Wasser;
die Abfuhr des geklärten Wassers; und
die Abfuhr von Klärschlamm, der aus den getrennten Flocken gebildet ist.

2. Verfahren nach Anspruch 1,
**dadurch gekennzeichnet, dass** die Trennung der Flocken durch Flotation bewirkt wird.

3. Verfahren nach Anspruch 1,
**dadurch gekennzeichnet, dass** die Trennung der Flocken durch Dekantierung, lamellar oder nicht, bewirkt wird.

4. Verfahren nach einem der Ansprüche 1 bis 3,
**dadurch gekennzeichnet, dass** die periodische Reinigung des Siebs das Einspritzen eines Fluids, ausgewählt aus der Gruppe bestehend aus Wasser unter Druck und komprimierter Luft, im Gegenstrom auf das mindestens ein Sieb umfasst.

5. Verfahren nach einem der Ansprüche 1 bis 4,
**dadurch gekennzeichnet, dass** die Regeneration des gesättigten Harzes die Elution auf dieses adsorbierter organischer Materialien durch Passage eines Eluierungsmittels über das Harz und die Rückgewinnung eines Eluats umfasst, wobei das Eluierungsmittel in mindestens eine Fraktion, die mit organischen Materialien stark beladen ist, und mindestens eine Fraktion, die mit organischen Materialien nicht stark beladen ist, fraktioniert wird, wobei die mit organischen Materialien stark beladene Fraktion abgeführt wird und die mit organischen Materialien nicht stark beladene Fraktion als Eluierungsmittel rückgeführt wird.

6. Verfahren nach einem der Ansprüche 1 bis 5,
**dadurch gekennzeichnet, dass** das Harz ein anionisches Harz ist.

7. Wasseraufbereitungsanlage zur Durchführung des Verfahrens gemäß einem der Ansprüche 1 bis 6, **dadurch gekennzeichnet, dass** diese umfasst:
einen durchgemischten Behälter (1), der ein nichtmagnetisches Ionenaustauscherharz aufnimmt, wobei der Behälter versehen ist mit Mitteln (2) zum Zuführen von Rohwasser, Bewegungsmitteln (3), mindestens einem Sieb (4), Mitteln (18) zur Extraktion des Harzes und Mitteln (5) zur Abfuhr des gefilterten Wassers;
Mittel (17) zur Reinigung des mindestens einen Siebs (4);
Mittel (6) zur Regeneration des Harzes und Mittel (7) zur Rückführung des regenerierten Harzes in den durchgemischten Behälter (1);
mindestens einen Koagulations-und Ballastausflockungsreaktor (12, 13) in Fluidkommunikation mit dem durchgemischten Behälter (1);
Trennmittel (14) in Fluidkommunikation mit dem mindestens einen Koagulations-und Ballastausflockungsreaktor (12, 13), die mit Mitteln (16) zur Abfuhr von geklärtem Wasser und mit Mitteln (17) zur Abfuhr von Klärschlamm versehen sind.

8. Anlage nach Anspruch 7,
**dadurch gekennzeichnet, dass** die Trennmittel ein Flotationsgerät aufweisen.

9. Anlage nach Anspruch 7,
**dadurch gekennzeichnet, dass** die Trennmittel (14) einen Dekantierer (15) aufweisen, der mit Lamellen ausgestattet ist oder nicht.

10. Anlage nach einem der Ansprüche 7 bis 9,
**dadurch gekennzeichnet, dass** das mindestens eine Sieb (4) eine Schnittgrenze zwischen 40 µm und 120 µm aufweist.

11. Anlage nach einem der Ansprüche 7 bis 10,
**dadurch gekennzeichnet, dass** das mindestens eine Sieb aus einem Kunststoffmaterial mit Lebensmittelqualität hergestellt ist.

12. Anlage nach Anspruch 11,
**dadurch gekennzeichnet, dass** das Kunststoffmaterial poröses Polyethylen mit hoher Dichte (PEHD) ist.

13. Anlage nach einem der Ansprüche 7 bis 12,
**dadurch gekennzeichnet, dass** das Harz ein nichtmagnetisches anionisches Harz ist.

14. Anlage nach einem der Ansprüche 7 bis 13,
**dadurch gekennzeichnet, dass** die Mittel (6) zur Regeneration von Harz einen Regenerationsbehälter (10), Mittel (9) zur Zufuhr eines Eluierungsmittels und Mittel (8) zur Trennung des Eluats in Fraktionen umfassen.

15. Anlage nach einem der Ansprüche 7 bis 14,
**dadurch gekennzeichnet, dass** die Reinigungsmittel (30) des mindestens einen Siebs (4) Mittel zur Verteilung eines Fluids, das aus Wasser unter Druck und komprimierter Luft ausgewählt ist, auf dem mindestens einen Sieb (4) aufweisen.

16. Anlage nach einem der Ansprüche 7 bis 15,
**dadurch gekennzeichnet, dass** die Mittel (18) zur Extraktion des Harzes mindestens einen Harzregenerator (19) aufweisen, der im durchgemischten Behälter (1) in der Nähe des mindestens einen Siebs (4) bereitgestellt ist.

## Claims

1. Method for treating water, containing organic matter **characterized in that** it comprises:
• a step of adsorption of the organic matter contained in said water in which this water is put into contact with an amagnetic ion-exchanging resin in at least one infinitely stirred tank;
• the filtering of the mixture of water and resin within said tank and the discharging of filtered water from this tank, said filtering being implemented through at least one screen provided within said tank enabling said resin to be contained in said infinitely stirred tank;
• the periodic cleansing of said at least one screen consisting of the separation, from this screen, of the saturated resin that has collected thereon;
• the draw-off of saturated resin from said tank;
• the regenerating of at least a part of said saturated resin thus drawn off;
• the recycling of said resin thus regenerated in said tank;
• a step of ballasted coagulation/flocculation and of separation comprising:
• the addition of coagulant reagent, flocculent reagent and microballast to the filtered water coming from said tank leading to the formation of flocs;
• the separation of said formed flocs from a clarified water;
• the discharge of said clarified water; and
• the discharge of the sludges formed by the separated flocs.

2. Method according to claim 1, **characterized in that** the separation of said flocs is done by flotation.

3. Method according to claim 1, **characterized in that** the separation of said flocs is done by lamellar or non-lamellar decantation.

4. Method according to any one of the claims 1 to 3, **characterized in that** said periodic cleansing of said screen comprises the injection of a fluid, chosen from the group constituted by pressurized water and compressed air, in a counterflow on said at least one screen.

5. Method according to one of the claims 1 to 4, **characterized in that** the regeneration of the saturated resin comprises the elution of the organic matter adsorbed on this resin by passage of an eluent on said resin and the recovery of an eluate, said eluate being fractioned into at least one fraction highly charged with organic matter and at least one fraction not highly charged with organic matter, said fraction highly charged with organic matter being discharged and said fraction not highly charged with organic matter being recycled as an eluent.

6. Method according to one of the claims 1 to 5, **characterized in that** said resin is an anionic resin.

7. Plant for the treatment of water for implementing the method according to any one of the claims 1 to 6, **characterized in that** it comprises:
• a infinitely stirred tank (1) collecting an amagnetic ion-exchanging resin, said tank being provided with means for conveying raw water (2), means of stirring (3), at least one screen (4), means for extracting said resin (18), and means for discharging filtered water (5);
• means for cleansing (17) said at least one screen (4);
• means for regenerating (6) said resin and means for recycling (7) regenerated resin in said infinitely stirred tank (1);
• at least one ballasted coagulation and flocculation reactor (12,13) in fluid communication with said infinitely stirred tank (1);
• means (14) of separation in fluid communication with said at least one coagulation and flocculation reactor (12, 13) provided with means for discharging clarified water (16) and means for discharging sludges (17).

8. Plant according to claim 7, **characterized in that** said means of separation include a floater.

9. Plant according to claim 7, **characterized in that** said means of separation (14) include a decanter (15) equipped or not equipped with blades.

10. Plant according to any one of the claims 7 to 9, **characterized in that** said at least one screen (4) has a cut-off threshold ranging from 40 µm to 120 µm.

11. Plant according to any one of the claims 7 to 10, **characterized in that** said at least one screen is made out of food-safe plastic material.

12. Plant according to claim 11, **characterized in that** said plastic material is porous high-density polyethylene (HDPE).

13. Plant according to any one of the claims 7 to 12, **characterized in that** said resin is an anionic amagnetic resin.

14. Plant according to any one of the claims 7 to 13, **characterized in that** said means for regenerating (6) a resin comprise a regeneration tank (10), means for conveying eluent (9) and means for separating (8) the eluent into fractions.

15. Plant according to any one of the claims 7 to 14, **characterized in that** the means for cleansing (30) said at least one screen (4) include means of distribution of a fluid chosen from among pressurized water and compressed air on said at least one screen (4).

16. Plant according to any one of the claims 7 to 15, **characterized in that** said means for extracting resin (18) include at least one resin recovery unit (19) provided in the infinitely stirred tank (1) in proximity to said at least one screen (4).
